(19) Europäisches Patentamt

European Patent Office

Office européen des brevets

(11) Veröffentlichungsnummer: **0 362 669**
**A1**

## (12) EUROPÄISCHE PATENTANMELDUNG

(21) Anmeldenummer: **89117723.0**

(22) Anmeldetag: **26.09.89**

(51) Int. Cl.⁵: **G11B 7/24**

(30) Priorität: **05.10.88 DE 3833788**

(43) Veröffentlichungstag der Anmeldung:
**11.04.90 Patentblatt 90/15**

(84) Benannte Vertragsstaaten:
**DE FR GB**

(71) Anmelder: **HOECHST AKTIENGESELLSCHAFT**
**Postfach 80 03 20**
**D-6230 Frankfurt am Main 80(DE)**

(72) Erfinder: **Wiedemann, Wolfgang, Dr.**
**Dipl.-Chem.**
**Pulignystrasse 14**
**D-6222 Geisenheim-Johannisberg(DE)**

(54) **Optisch beschreib- und lesbares Aufzeichnungsmaterial in Air-Sandwich-Form.**

(57) Die Erfindung betrifft ein optisch beschreib- und lesbares Aufzeichnungsmaterial in Air-Sandwich-Form, im wesentlichen enthaltend einen eine optische Aufzeichnungsschicht tragenden Träger (1) und eine Platte (3), die der optischen Aufzeichnungsschicht (2) gegenüberliegt und dadurch gekennzeichnet ist, daß der Träger mit der Platte über mindestens eine Naht (4, 5) aus einem Schmelzklebstoff direkt verbunden ist.

Die mit dem Schmelzklebstoff beaufschlagten Träger zeigen ebenso gute optische Eigenschaften, z. B. hinsichtlich Doppelbrechung, wie unbehandelte Träger.

FIG. 1

Xerox Copy Centre

EP 0 362 669 A1

## Optisch beschreib- und lesbares Aufzeichnungsmaterial in Air-Sandwich-Form

Die Erfindung betrifft ein optisch beschreib- und lesbares Aufzeichnungsmaterial in Air-Sandwich-Form, im wesentlichen enthaltend einen eine optische Aufzeichnungsschicht tragenden Träger und eine Platte, die der optischen Aufzeichnungsschicht gegenüberliegt.

Air-Sandwichs optischer Aufzeichnungsmaterialien vom DRAW- (einmal beschreibbar) und vom E-DRAW-Typ (mehrfach beschreibbar) sind bekannt. Während die einmal beschreibbaren optischen Aufzeichnungsmaterialien beispielsweise auf der Basis von organischen Farbstoffen oder auf der Basis von Tellur arbeiten, werden unter den mehrfach beschreibbaren optischen Aufzeichnungsmaterialien magneto-optische oder "phase-change"-Systeme verstanden. Bei all diesen Materialien wird die optische Aufzeichnungsschicht durch die transparente Trägerplatte hindurch beschrieben und auch gelesen, während die ihr gegenüberliegende Platte Schutzfunktionen für die optische Aufzeichnungsschicht besitzt. Gleichzeitig kann diese Platte auch eine optische Aufzeichnungsschicht tragen, so daß die Speicherkapazität eines solchen Sandwich-Systems aus zwei Platten (1. Trägerplatte und Schutzplatte = 2. Trägerplatte) verdoppelt ist.

Gegenüber optischen Aufzeichnungsmaterialien mit einer organischen Schutzschicht oder gegenüber solchen mit vollflächig verklebten Sandwich-Systemen bietet die Air-Sandwich-Bauweise, die keinen vollflächigen Kontakt der Trägerplatte bzw. der darauf aufgebrachten optischen Aufzeichnungsschicht mit der Schutzplatte, sondern nur punktualen Kontakt, z. B. über Abstandshalter, aufweist, den Vorteil, daß die optischen Aufzeichnungsparameter, insbesondere die Schreibempfindlichkeit, nicht durch die organische Beschichtung, d. h. die Schutzschicht, oder durch den Klebstoff negativ beeinflußt werden.

Air-Sandwichs können sowohl in geschlossener (CAS-Typ) als auch in offener Form (OAS-Typ) vorliegen. Bei Verwendung des CAS-Typs ist die optische Aufzeichnungsschicht hermetisch eingeschlossen und dadurch z. B. gegenüber Staub und Feuchtigkeit geschützt. Gase, beispielsweise Sauerstoff, können nur durch das Substrat hindurch, d. h. diffusionskontrolliert, eindringen. Die beim CAS-Typ vorliegende geschlossene Kammer hat aber erhebliche Nachteile: So können Verwindungen oder Umformungen infolge von Druckänderungen - bedingt durch Höhenlage oder Klima - entstehen. Des weiteren können beim Betrieb des Air-Sandwichs bei höheren Umdrehungszahlen (>1800 rpm) durch Fliehkraft bedingte Druckänderungen Verformungen des Air-Sandwichs vom CAS-Typ auslösen (EP-A 139 354).

Die sogenannten offenen Typen (OAS-Typ) weisen dagegen mindestens eine Öffnung, vorwiegend im inneren Abstandshalter des Air-Sandwichs, auf, so daß die negativen Folgen aufgrund von Druckänderungen hier nicht auftreten können (EP-B 0 086 065, EP-A 0 139 354, EP-A 0 195 720 und DE-A 27 21 334 = US-A 4 074 282).

Die Herstellung von Air-Sandwichs mit optischen Aufzeichnungsschichten sowie deren Aufbau kann unterschiedlich sein:

In einem Verfahren werden besonders ausgebildete Träger benötigt, auf denen Stege als Abstandshalter und Energierichtungsgeber vorgegeben sind, über die dann der Träger mit der Schutzplatte mittels Ultraschall verschweißt wird (EP-B 0 094 273 = US-A 4 564 932). In einer modifizierten Form dieses Grundkonzepts ist zur Erzeugung der Stege eine besondere Bearbeitung der Matritzen für das Spritzgußverfahren notwendig (EP-A 0 204 378). Der Nachteil von Ausführungsformen dieses Grundkonzepts ist, daß beim Verschweißungsvorgang Verwindungen im Air-Sandwich auftreten können.

Werden die oben genannten Stege breiter ausgebildet, kann auf diesen auch ein Lösemittelantrag erfolgen, so daß nach Anquellung der Stege der Träger mit der Schutzplatte verklebt werden kann (EP-A 0 024 194).

Auch können nachträglich eingebrachte separate Abstandshalter (d.h. nicht im Spritzgußverfahren auf den Träger aufgebrachte) mittels Ultraschallverschweißung mit dem Träger und der Schutzplatte zu einem Air-Sandwich ver bunden werden. Hierzu sind aber höhere Energien notwendig, wodurch die Wahrscheinlichkeit von Verbiegungen zunimmt (EP-A 0 231 121).

Das Aufkleben von ringförmigen inneren und äußeren Abstandshaltern auf Trägerplatten und deren anschließende Verklebung mit der Schutzplatte wird ebenso beschrieben (DE-A 27 27 189, DE-A 37 18 302, DE-A 37 01 801, DE-A 36 42 961 = US-A 4 711 798, DE-A 27 21 334 = US-A 4 074 282, US-A 4 686 543). Hierzu werden unterschiedliche Klebstoffsysteme, z. B. auch UV-Lacke, eingesetzt. Nachteilig an diesen Bauformen ist die aufwendige Herstellung ringförmiger Abstandshalter sowie deren konzentrische Justierung und Verklebung insbesondere bei vorwiegend zweifachen Klebstoffantrags. Auch stellen das nachfolgende Verdunsten der Lösemittel, die thermische Härtung und die UV-Bestrahlung zusätzliche Verarbeitungsschritte dar, die vermieden werden sollten.

Aber auch die Abstandshalter als solche sind modifiziert worden:

In der EP-A 0 235 815 wird elastomerer Schaum als Abstandshalter in optischen Aufzeichnungsmaterialien eingesetzt. Abstandshalter, die Hohlräume bzw. Druckausgleichskammern aufweisen, werden in der DE-A 33 37 527 (= US-A 4 555 716) und der EP-B 0 086 065 vorgestellt. Diese Hohlräume können wiederum mit kreis- oder kreuzförmigen Verstärkungen ausgestattet sein (EP-B 0 049 821).

Auch die Zwischenräume von speziellen zylinder- oder kegelförmigen Abstandshaltern, die z. T. in mehrfach ringförmiger Anordnung auf dem Träger aufgebracht sind, können mit Klebstoff angefüllt sein, um eine Haftung mit der Schutzplatte zu ermöglichen (EP-A 0 199 136). Die Schutzplatte kann aber mit diesen Abstandshaltern auch mittels einer Ultraschallverschweißung verbunden werden. Von Nachteil dürfte hierbei die aufwendige Herstellung von Matrizen für die Träger sein.

Aufgabe der vorliegenden Erfindung war es daher, ein optisches Aufzeichnungsmaterial bereitzustellen, das so wohl in offener als auch in geschlossener Air-Sandwich-Form eingesetzt werden kann und in einem einfachen, schnell erfolgenden Verfahrensschritt mit hoher Zuverlässigkeit herstellbar ist. Die beschriebenen Nachteile des Standes der Technik sollten im erfindungsgemäßen optischen Aufzeichnungsmaterial nicht mehr anzutreffen sein.

Gelöst wurde die Aufgabe durch ein optisches Aufzeichnungsmaterial der eingangs beschriebenen Gattung, das dadurch gekennzeichnet ist, daß der Träger mit der Platte über mindestens eine Naht (Raupe) aus einem Schmelzklebstoff direkt verbunden ist. In der bevorzugten Ausführungsform ist die Naht aus Schmelzklebstoff konzentrisch. In einer weiteren bevorzugten Ausführungsform kann der Antrag des Schmelzklebstoffes mittels einer dafür entwickelten Vorrichtung sowohl im Außen- als auch im Innenwandbereich zugleich konzentrisch erfolgen.

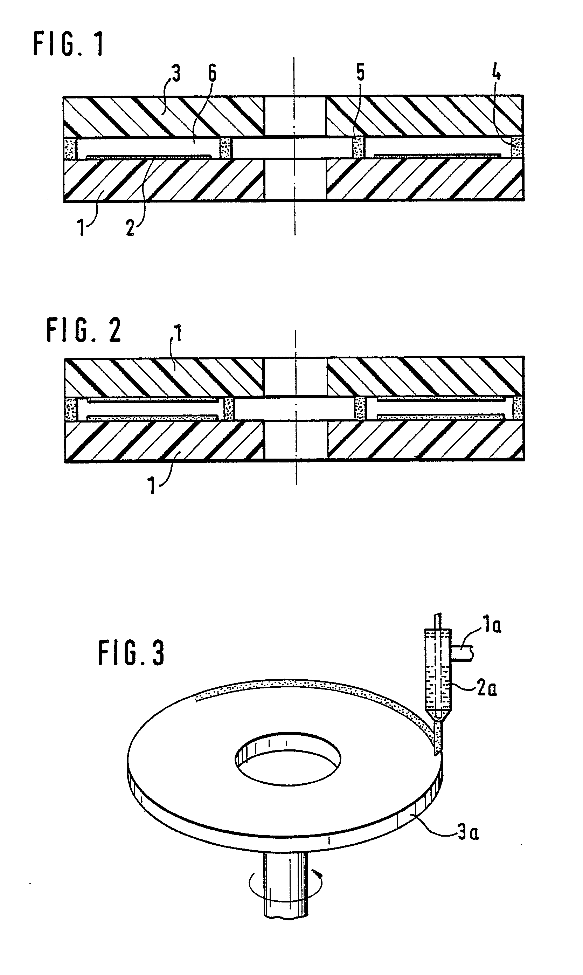

Nach Figur 1 ist zu erkennen, daß die mit dem Träger 1 über die Klebstoffnähte 4 und 5 verbundene Platte auch Schutz für die auf den Träger aufgebrachte Aufzeichnungsschicht 2 ist. Die Platte kann auch eine optische Aufzeichnungsschicht tragen (Figur 2), so daß sich zwei optische Aufzeichnungsschichten im Air-Sandwich direkt gegenüberstehen. Der Hohlraum 6 solcher Air-Sandwich-Formen kann durch Spalte (Öffnungen) in der Außen- und/oder Innennaht mit der Außenluft in Verbindung stehen.

Da der Vorgang des Schreibens und Lesens von Informationen vorwiegend durch den Träger hindurch erfolgt, ist es erforderlich, daß das Material des Trägers für die Anwendung von Laserstrahlen, insbesondere Laserdioden, optisch transparent ist.

Beispiele für diese Trägermaterialien sind Kunststoffe wie Polycarbonate (PC), Polyacrylate, insbesondere Polymethacrylate, Polyester, Polyolefine einschließlich olefinischer Copolymere, Epoxide und Glas. Weiterhin können Polymerblends z. B. mit PC und weiteren Polymeren, wie z. B. Polyvinylidenchlorid, zum Einsatz kommen.

Auf der Oberfläche des Trägers können Führungsrillen (tracks, grooves) in spiraliger oder konzentrischer Form sowie Vorformatierungen für Adressensignale ausgebildet sein. Träger mit diesem Aufbau können entweder durch Spritzgießen oder durch Photopolymerisation, vorwiegend auf Glas, erzeugt werden. Die Dicke der Träger sollte in der Größenordnung von 1,2 mm oder darunter liegen.

Bei Einsatz von magneto-optischen und "phase-change", d.h. mehrfach beschreibbaren, Aufzeichnungsmaterialien sind Trägermaterialien mit minimaler Doppelbrechung sowie mit geringer Feuchte- und Luftdurchlässigkeit bevorzugt.

Die Träger können durch Prozesse wie Ionenätzung, Coronaeinwirkung oder Niederdruckplasmavorbehandlung sowie durch das Auftragen sehr dünner z. B. organischer Schichten zwecks Haftverbesserung etc. modifiziert werden, insbesondere angerauht werden.

Als optische Aufzeichnungsschichten kommen sowohl einfach als auch mehrfach beschreibbare in Frage. Zu den einmal beschreibbaren Materialien zählen z. B. solche, die in der Schicht mindestens einen organischen Farbstoff enthalten (Dye/Polymer-System). Hierunter zählen z. B. Polymethinfarbstoffe oder Phthalocyanin-, insbesondere Naphthocyaninderivate, Tetrahydrochinon-, Dioxazin-, Triphenothiazin-, Phenanthron-, Anthrachinon-, Indanthren-, Xanthen-, Triphenylmethanfarbstoffe, sowie Squariliumsalze.

Die organischen optischen Aufzeichnungsschichten können mit mehreren polymeren Materialien, z. B. Bindemitteln, Stabilisatoren für die Konservierung, Dispergiermitteln, flammhemmenden Mitteln, Gleitmitteln, Mitteln zur Verhinderung der Aufladung und/oder Weichmachern versetzt werden. Sie können auf dem Schichtträger nach herkömmlichen Verfahren gegebenenfalls auch mehrschichtig aufgetragen werden, z. B. durch Aufdampfen der Farbstoffe im Vakuum, bevorzugt durch Beschichten (spin-coating) aus der Lösung.

Ebenso zu den einmal beschreibbaren Materialien zählen Metalle wie In, Sn, Te, Bi und Se. Insbesondere bevorzugt ist hierbei Te, das auch mehrfach beschreibbar sein kann (phase-change).

Metallverbindungen wie z. B. Te-O-Sn-Ge- sowie (GeTe)Sn-, Ga-Se-Te-Systeme zählen zu den mehrfach beschreibbaren, amorph-kristallinen Systemen. Auch mehrfach beschreibbare Systeme vom "phase-change"-Typ können Anwendung finden (z. B. In/Sb-, Ag/Zn-, Mn/Bi- sowie Te/Ge-Systeme).

Die Metalle bzw. Metallverbindungen können in der Aufzeichnungsschicht legiert oder schichtförmig vorliegen; die optischen Aufzeichnungsschichten werden vorwiegend im Vakuum aufgedampft oder gesputtert.

Vorzugsweise liegt die Dicke der Aufzeichnungsschicht im Bereich von von 200 A bis 2 μm, insbesondere im Bereich von 20 bis 200 nm.

Im erfindungsgemäßen optischen Aufzeichnungsmaterial sind die mehrfach beschreibbaren magneto-optischen Aufzeichnungsschichten bevorzugt, insbesondere die sogenannten RETM-Systeme (Rare Earths-Transition Metals Composites). Besonders bevorzugt hierunter ist das TbFeCo-System (US-A-4 625 217 und US-A-4 694 358). In diesem System kann Tb z. B. durch andere seltene Erdmetalle, wie z. B. Dy oder Gd ersetzt sein. Es kann aber auch zusätzlich weitere Metalle enthalten, beispielsweise Rh oder Gd, um insbesondere die Korrosionseigenschaften des Systems zu verbessern. Beispiele sind in den US-A 4 388 400, 4 271 256, 4 415 650 und 4 237 468 genannt.

Besonders verbreitet sind Schichtenverbunde, in denen die magneto-optische Aufzeichnungsschichten insbesondere von zwei Sperrschichten - auf jeder Seite eine, bevorzugt in der gleichen Zusammensetzung - umgeben sind. Als Materialien für die Sperrschichten werden Carbide, Nitride oder Oxide von Metallen wie Al, Si oder Ti eingesetzt. Mischungen und Legierungen der genannten Materialien sind mitumfaßt. Besonders bevorzugt sind z. B. $SiN_x$, insbesondere $Si_3N_4$, AlN, TiN oder Mischtypen wie z.B. TiON. Die Sperrschichten sind relativ dünn in jeweils ≤ 100 nm Dicke auf die Aufzeichnungsschicht aufgetragen. Das Auftragen erfolgt im Vakuum durch Aufdampfen; vorteilhaft sind Sputter-Prozesse.

Die optischen Aufzeichnungsschichten, zu denen sowohl die einmal als auch die mehrfach beschreibbaren, beson ders magneto-optischen, zählen, können zusätzlich mit einer gegen Feuchte und Oxidation schützenden Schutzschicht beschichtet sein, insbesondere bei offenen Sandwich-Typen, die bei Feuchte- und Lufteinflüssen dadurch weniger angegriffen werden. Hierzu zählen UV-härtbare organische Schutzschichten (z. B. aus Epoxidharzen). Es können aber auch Schutzschichten aus Bindemitteln wie Polycarbonaten, Polyurethanen, Acrylharzen, z. B. Polymethacrylaten, Polysulfonen, Polyestern, Celluloseestern, Polystyrolen, Polystyrol-Copolymerisaten, Polyvinylalkoholen sowie PVC- und PVDC-Copolymere eingesetzt werden. Sie werden bevorzugt durch Sprühen oder im Spin-Coating-Prozeß aufgebracht. Die Dicke solcher Schutzschichten liegt insbesondere im Bereich von 2 bis 20 μm, sie kann aber - je nach gewünschter Schutzwirkung - über oder unter dem angegebenen Bereich liegen.

Als Klebstoff für die Verbindung des Trägers mit insbesondere einer Schutzplatte oder des Verbundes zweier Trägerplatten sind sowohl Schmelzklebestoffe als auch Schmelzhaftklebstoffe einsetzbar.

Von den Schmelzhaftklebstoffen sind z. B. die thermoplastischen Kautschukarten, Blockcopolymere aus Styrol und Butadien oder Isopren (Polyisobutylene) und Polyolefine zu nennen. Ihr Klebeverhalten kann durch Mischungen verschiedener Schmelzhaftklebstoffe aber auch mit Klebern des Typs "Schmelzklebstoff" beeinfluß werden. Zu den Schmelzhaftklebstoffen zählen auch Terpenharze sowie hydrierte Polyterpene. Nähte aus Schmelz haftklebern sind aber größtenteils weniger temperaturstabil und neigen oft zum Fließen, was besonders für die eng dimensionierten Außennähte bzw. -raupen im erfindungsgemäßen Air-Sandwich kritisch werden kann.

Besser eignen sich dagegen Schmelzklebstoffe. Diese stellen z. B. Mischungen aus etwa gleichen Teilen Ethylenvinylacetat-Copolymeren dar, die unterschiedliche Gehalte an Vinylacetat und variierende Schmelzindices besitzen können, mit Harzen, wie Kohlenwasserstoffharzen, Wachsen oder Paraffinen. Die Mischungen werden oftmals auch als Schmelzklebstoffe auf synthetischer Basis bezeichnet und können, je nach ihrer Abmischung, auch dem Typus des Schmelzhaftklebstoffes angehören, die allerdings Schwierigkeiten bei ihrer Verarbeitung hinsichtlich einer geringeren Klimastabilität zeigen.

Besonders gut geeignet sind Schmelzkleber vom (Co)polyamid- oder (Co)polyester-Typ. Die besonderen Vorteile der (Co)polyamide liegen in ihrer guten Haftung auf vielen Trägermaterialien, ihrer hohen Wärmebeständigkeit und z. T. auch in ihrer guten Flexibilität. (Co)polyester eignen sich meist wegen ihrer hohen Festigkeit und ihrer hohen Wärmebeständigkeit. Beide Typen können auch in Mischung mit anderen Polymeren vorliegen, gegebenenfalls können sie auch stabilisierende Additive enthalten.

Insbesondere bevorzugt sind Copolyamide auf Basis dimerisierter Fettsäuren. (z. B. ®Eurelon, ®Macromelt). Sie zeigen sehr gute Verarbeitungseigenschaften, insbesondere eine hohe Haftfestigkeit, da die zum Aufbau der Polyamidharze eingesetzten dimerisierten Fettsäuren einen wesentlichen Einfluß auf Struktur und Morphologie der Polyamide haben. Die dabei eingesetzten dimerisierten Fettsäuren werden durch Dimerisierung von aus natürlichen Rohstoffen gewonnenen ungesättigten, langkettigen Fettsäuren hergestellt. Die z. T. stark verzweigten Dimerfettsäuren können chemisch weiter modifiziert sein. Die Copolyamide werden durch Polykondensation der dimerisierten Fettsäuren mit z. B. Diaminen hergestellt. Die Schmelzklebstoffe vom Copolyamid-Typ besitzen eine noch genügend große "offene Zeit", d. h. die Zeitspanne, die zwischen dem Klebstoffauftrag und dem Zusammenfügen der zu verklebenden Teile maximal verstreichen darf, um anschließend noch einen Verbund zu erhalten, der eine genügend hohe Stabilität aufweist. Ihre Verarbeitungstemperatur liegt je nach Typus im sogenannten mittleren bzw. unteren Verarbeitungsbereich, vorwiegend bei 180 bis 230 °C. Sie zeigen bei 220 °C eine Viskosität von höchstens 10 Pa·s (nach ASTDM-3236). Diese Eigenschaft macht den Schmelzklebstoff besonders geeignet für die Herstellung des erfindungsgemäßen Air-Sandwiches. Zu den Schmelzklebstoffen, die erfindungsgemäß eingesetzt werden können, zählen auch aushärtende Schmelzklebstoffe, insbesondere auf Polyurethan-Basis, z. B. feuchtigkeitshärtender PUR-Prepolymer-Schmelzklebstoff. Ihre Verarbeitung erfolgt meistens bei Temperaturen unter 150 °C. Beim Auftragen auf die Träger bildet sich eine konsistente Raupe mit genügend langer offener Zeit aus.

Der Schmelzklebstoff besitzt schon gleich nach Auftragen der Schutzplatte eine gute Adhäsion, die allerdings durch Einwirkung von Feuchtigkeit noch gesteigert werden kann. Ebenso härtet der Schmelzklebstoff durch Einfluß von Feuchtigkeit endgültig aus (1-2 Tage), wobei sich allerdings an seinem Volumen nichts ändert (wichtig für konstanten Abstand).

Auch bei der Herstellung des erfindungsgemäßen optischen Aufzeichnungsmaterials vom Air-Sandwich-Typ, spielen die positiven Eigenschaften des Schmelzklebstoffes eine besondere Rolle: Er soll sich z. B. in gleichmäßig dicken Raupen auf das Trägermaterial bzw. auf die Schutzplatte auftragen lassen. Zudem soll sich nach dem Aufbringen der Schutzplatte bzw. eines weiteren Trägermaterials die Nahtbreite der "Schmelzkleberaupe" wie auch die Gesamtdicke des erfindungsgemäßen optischen Aufzeichnungsmaterials reproduzierbar einstellen lassen. Diese Eigenschaften müssen gefordert werden, damit der Schmelzklebstoff auch die Aufgabe eines Abstandhalters übernehmen kann.

Bei welcher Temperatur letztendlich verarbeitet wird, um die oben beschriebenen Bedingungen zu erfüllen, hängt im wesentlichen vom Typ des Schmelzklebstoffes, d. h von dessen Temperaturstabilität, ab. Bevorzugt werden Temperaturen im Bereich von 130 bis 230 °C, unmittelbar über der Düse gemessen, aus der der Schmelzklebstoff austritt.

Die Viskosität des Schmelzklebstoffes sollte unter 10 Pa·s liegen, jedoch können bei Anwendung von höheren Drücken auch höherviskose Schmelzklebstoffes eingesetzt werden. Die exakt anzuwendenden Viskositäten hängen aber von den gegebenen Geräten sowie von den Verarbeitungsbedingungen ab.

Ein wesentlicher Gesichtspunkt für die Bereitstellung von dauerhaften Klebeverbunden ist die Auswahl des Schmelzklebstoffes nach seiner "offenen Zeit". Der sogenannte "hot tack" der aufgelegten Kleberraupen muß bei der Verdeckelung noch vorhanden sein, um dauerhaft festhaftende Verbunde zu erhalten. Besonders kritisch ist dieses Erfordernis deswegen, weil unter den vorgegebenen Dimensionen eines Air-Sandwichs hinsichtlich der Nahtbreite und -höhe relativ dünne Kleberaupen aufgebracht werden müssen, die entsprechend ihrem kleinen Volumen sehr schnell abkühlen.

Während Kleberraupen von Schmelzhaftklebstoffes einen von der Temperatur geringer abhängigen "hot tack" aufweisen, d.h. die offene Zeit weniger kritisch ist, sind Schmelz-kleberraupen in ihrem Klebeverhalten dagegen meistens stark von der Temperatur abhängig. Sollen diese Schmelzklebstoffe für den erfindungsgemäßen Air-Sandwich verwendet werden, ist Voraussetzung, daß die maschinelle Verdeckelung sehr schnell, vorwiegend in Bereichen von 0,5 bis 2 s, erfolgt, um noch eine gute Haftung erreichen zu können.

Die Schmelzklebstoffe müssen neben den genannten guten Verarbeitungseigenschaften eine Reihe spezieller Eigenschaften besitzen, die sich auf die Verwendung für Air-Sandwichs beziehen, d. h. beispielsweise auf das Aufbringen der Schutzplatte auf den Träger. Es soll z. B. eine hohe Wärmefestigkeit der Nähte, insbesondere bei mindestens 70 °C, gewährleistet sein; es soll aber kein Kriechen oder Fließen der Nähte bei höheren Temperaturen erfolgen. Ebenso soll die Benetzung und Haftung der Schmelzklebstoffe auf Kunststoffen, insbesondere auf PC und PMMA, gegebenenfalls auch ohne Vorbehandlung der Kunststoffoberfläche, gegeben sein. Schließlich soll der Verbund eine hohe Klimastabilität auch bei längerem Lagern aufweisen. Ferner ist die Auswahl der Schmelzklebstoffe auch dahingehend vorzunehmen, daß diese beim Verarbeiten nicht schäumen und keine Blasen in den Nähten bilden.

Zur Herstellung der erfindungsgemäßen optischen Aufzeichnungsmaterialien vom Air-Sandwich-Typ wird der Schmelzklebstoff auf die Trägerplatten bzw. Schutzplatten in Form von kreisförmigen Raupen bzw. Nähten aufgebracht. Insbesondere werden zwei Raupen ausgeführt, eine Innen- und eine Außenraupe. Das Legen der Raupen kann sowohl gleichzeitig als auch zeitlich kurz nacheinander erfolgen. Da die sogenannten offenen Zeiten der verwendeten Kleber relativ kurz sind, muß das Auftragen der Kleberraupen, insbesondere beim zeitlich versetzten Antrag, sehr schnell erfolgen, ebenso wie auch das anschließende Abdecken mit der Schutzplatte bzw. einer weiteren Trägerplatte. Durch die schnelle Verarbeitungsweise werden besonders festhaftende Klebeverbunde erhalten. Durch einfache Steuerung der Antragszeit (Taktzeit) des Schmelzklebstoffes sind relativ einfach entweder die geschlossenen oder aber die offenen Air-Sandwich-Formen jedes gewünschten Typs zugänglich. Das zeitraubende Fertigen und Ansetzen von speziellen maßgearbeiteten Abstandshaltern entfällt.

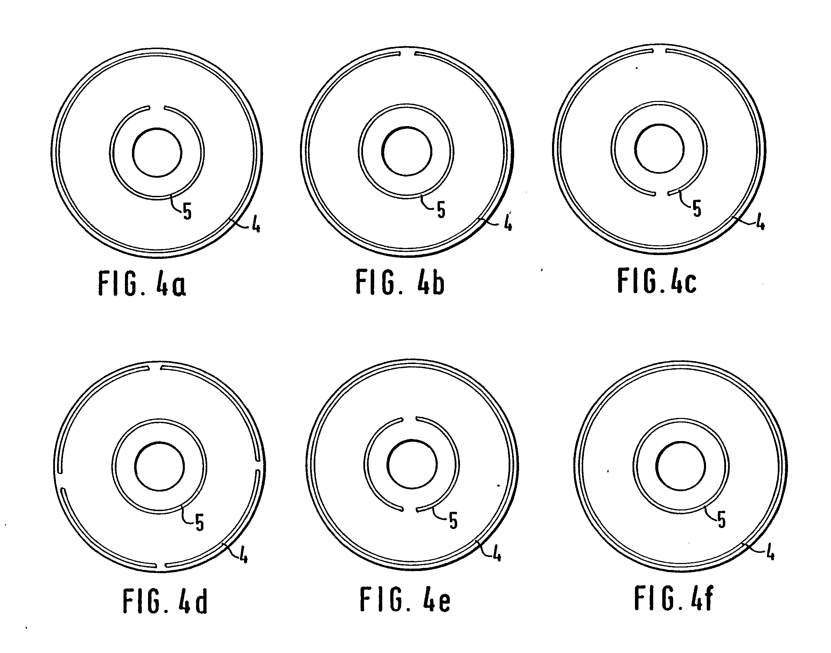

Figur 4f zeigt einen geschlossenen Typ mit zwei kreisrunden Kleberraupen. Die Figuren 4a bis 4e verdeutlichen verschiedene Sandwichs vom offenen Typ, die besonders ·bevorzugt sind. Insbesondere bevorzugt sind allerdings Typen, in denen sowohl die Innen- als auch die Außennähte jeweils einmal unterbrochen sind (d.h. Figur 4c, wobei jedoch die Öffnungen nicht unbedingt entgegengesetzt angeordnet sein müssen).

Die Breite der Nähte kann bei der Innennaht bevorzugt im Bereich von über 5 mm liegen, die Außennaht sollte wegen des Beginns der Schreibzone im Abstand von 2,5 mm vom Außenrand unter 2 mm breit sein.

Besonders überraschend ist zudem, daß durch die Verwendung der beschriebenen Schmelzklebstoffe der erforderliche Abstand zwischen Träger und Schutzplatte - auch ohne Abstandshalter - reproduzierbar einzustellen ist und dieser einmal eingestellte Abstand auch über eine lange Lagerzeit hinweg konstant bleibt.

In einer bevorzugten Ausführungsform wird der Träger mit einer magneto-optischen Aufzeichnungsschicht durch Nähte verbunden. Dabei soll die Gesamtdicke des optischen Aufzeichnungsmaterials, bei einer Trägerschichtdicke von ca. 1,2 mm, unter 3 mm bleiben. Der Abstand zwischen Träger und Schutzplatte bzw. zwischen einem weiteren Träger sollte, abhängig von der Gesamtdicke, nicht unter 0,1 mm bis etwa 0,6 mm betragen. Bevorzugt wird ein Abstandsbereich von 0,2 bis 0,4 mm.

Die Herstellung der Air-Sandwich-Formen wird in Figur 3 verdeutlicht. Auf einem Drehteller wird ein Träger 3a, z. B. von ca. 86-90 mm (3,5") Durchmesser zentriert und schließlich über eine Vakuumpumpe fest angesaugt. Grundsätzlich sind auch Träger bis ca. 120-130 mm (5 1/4") Durchmesser verwendbar. Der Schmelzklebstoff wird über eine Kolbendüseneinrichtung 2a als Antragsapparatur mit beheizter Vorkammer unter Druck 1a in Form einer Kleberraupe auf den sich drehenden Träger 3a konzentrisch aufgebracht. Der Abstand der Düsenöffnung zum Träger liegt dabei unter 2 mm. Der Schmelzklebstoffantrag pro kreisförmiger Raupe erfolgt innerhalb ca. 1 s. Der Durchmesser der Düsen liegt im Bereich von 0,2 bis 0,6 mm, insbesondere bei 0,3 bis 0,5 mm. Die Temperatur, die zum Aufschmelzen eines Schmelzklebstoffes benötigt wird, kann im Bereich von 60 bis 250 °C eingestellt werden. Der Betriebsdruck im Antragskopf liegt im Bereich von 4 bis 10 bar. Insbesondere wird der Druck, der für das Antragen des Schmelzklebstoffes notwendig ist, durch Stickstoff oder andere inerte Gase aufgebaut. Je nach Antragsapparatur kann der Betriebsdruck auch über 10 bar betragen. Schmelzklebstoffantragssysteme werden beispielsweise in der US-A 3 587 930 genannt.

Sofern die bevorzugten zwei Nähte nacheinander aufgelegt werden sollen, wird insbesondere mit der Innennaht begonnen. Nachdem in diesem Fall eine Innennaht ausgeführt worden ist, wird die Dosiervorrichtung bzw. das Schmelzklebstoffantragssystem in die Position zum Auflegen der Außenraupe gefahren.

Unmittelbar nach erfolgtem Schmelzklebstoffantrag wird eine Deckplatte (Träger oder Schutzplatte) auf den unteren Träger gepreßt. Der Abstand zwischen den beiden Auflageebenen der Platten ist dabei, z. B. auf 2,6 mm eingestellt. Die sogenannte "offene Zeit", die dabei verstreichen darf, ohne daß der Kleber schon abgebunden hat, soll dabei - insbesondere beim sukzessiven Kleberantrag - um 5 s liegen. Diese Zeitspanne ist klein genug, um sowohl Schmelzhaftklebstoff als auch Schmelzklebstoffe verwenden zu können, insbesondere vom Typ des Ethylenvinylacetat-Copolymeren.

Es ist von seiten der Auftragstechnik möglich, die sogenannten "offenen Zeiten' unter 2 s zu senken. Als Variablen dienen hierbei z. B. die Erhöhung der Umdrehungspunktzahl des Drehtellers, die Erhöhung des Druckes in der Dosiervorrichtung, z. B. durch Einbau von Zahnradpumpen, die Anwendung der Transporttechnik sowie der gleichzeitige Antrag von Innen- und Außenraupe.

Sollten diese kürzeren "offenen Zeiten" gewählt werden, können Schmelzklebstoffe mit höherer Wärmebeständigkeit gewählt werden. Von den bevorzugten Schmelzklebstoffen sind hierzu besonders die Copolyamid-Typen geeignet.

Die Verarbeitung von Trägerplatten mit optischen Aufzeichnungsschichten und Schutzplatten zu den erfindungsgemäßen Air-Sandwich-Formen mittels Schmelzklebstoffen, ohne Verwendung von speziell geforderten Abstandshaltern, ist ein einfaches, schnelles und deshalb auch wirtschaftliches Verfahren.

Vorteilhaft und überraschend ist, daß mit der Art und Weise des Schmelzklebstoffantrags zugleich der endgültige Abstand z. B. von zwei gegenüberliegenden Aufzeichnungsschichten eingestellt werden kann, d. h., daß dieser konstant bleibt. Der Abstand dieser Schichten liegt bei mindestens 0,1, bevorzugt bei 0,2 bis 0,4 mm.

Ferner ist überraschend, daß durch den Schmelzklebstoff die optischen Eigenschaften der Trägerplatte, insbesondere z. B. die niedrige Doppelbrechung z. B. einer Polycarbonatplatte, nicht beeinflußt werden. Untersuchungen mit polarisiertem Licht ergaben, daß keine Gangunterschiede bestehen an Trägern aus Polycarbonat mit aufgelegter Klebstoffraupe sowie an Polycarbonatverbunden, jeweils verglichen mit nichtmodifizierten Trägern aus Polycarbonat.

Die folgenden Beispiele sollen die Erfindung erläutern, nicht jedoch auf diese beschränkend wirken.

Beispiel 1

Ein flexibles, thermoplastisches Copolyamidharz ((R)Eurelon 2140) wurde mit einer Düse mit 0,4 bis 0,5 mm Durchmesser bei einer Temperatur von 220 °C (Viskosität: 7 bis 8 Pa•s) und einem über der Klebstoffschmelze lagernden Druck von 7 bar auf einen sich drehenden Polycarbonatträger eines Durchmessers von 3,5″ (40 bis 120 Upm) aufgetragen. Es wurden zwei kreisförmige Raupen außerhalb des Aufzeichnungsbereiches (50 bis 84 mm Durchmesser) erzeugt, eine bei ≦ 33 mm Durchmesser (Innenbereich) und die zweite außen bei ≦ 89 mm Durchmesser. Die Umdrehungszahl des Trägers war sowohl beim Ausführen der Innennaht als auch der Außennaht gleich groß. Die Auflagezeit der Außennähte lag im Bereich von 0,5 bis 1,5 s.

Nach dem Auftragen der Klebstoffraupen wurde der Träger mit einer zweiten Platte, in diesem Fall mit einem weiteren Polycarbonatträger mit einer weiteren optischen Aufzeichnungsschicht, mittels einer Zylindervorrichtung zu einem Air-Sandwich verpreßt. Unter diesen Verarbeitungsbedingungen liegt die Klebernahtbreite bei 1,1 bis 1,5 mm bei einer Gesamtdicke des Air-Sandwichs von 2 63 ± 0,01 mm.

Mit diesem Schema wurden Verbunde entsprechend den Figuren 4a, 4b, 4c und 4f hergestellt.

In allen Fällen zeigte sich nach Durchführung mehrtägiger Klimatests bei 60 °C und 90 % r. F. keine Änderung der Nähte, insbesondere hinsichtlich ihrer Form. Zugleich blieben sie sehr gut haftend, d. h., die Verbunde waren stabil.

Beispiel 2

Ebenso, wie in Beispiel 1 beschrieben, wurde ein thermoplastisches Copolyamidharz auf der Basis dimerisierter Fettsäuren ((R)Macromelt 6735) verarbeitet. Die Temperatur im Düsenbereich betrug 225 °C die Viskosität des Schmelzklebstoffes ca. 3 Pa•s, die Düse hatte einen Durchmesser 0,4 mm, und der Schmelzklebstoff wurde mit einem Druck von 5 bar (Stickstoffgas) in Form von homogenen, blasenfreien Raupen von 1,3 bis 1,5 mm Breite auf einen Polycarbonatträger aufgetragen. Nach sofortigem Aufbringen eines weiteren Polycarbonatträgers konnte ein gut haftender Air-Sandwich erhalten werden.

Der Klimatest zog sich über 185 hrs bei 60 °C und 90 % r. F. Die Nähte des Air-Sandwichs blieben aber unverändert formstabil und sehr gut haftend.

Beispiel 3

Ein weiterer Versuch wurde mit einem thermoplastischen Copolyesterharz ((R)Macromelt 7050) mit zwei Polycarbonatplatten durchgeführt. Die Temperatur im Düsenbereich lag bei ca. 210 °C, die Viskosität des Schmelzklebstoffes bei ca. 8,8 Pa•s, der Druck des Stickstoffgases bei 5 bar. Mit einer Düse von 0,25 mm Durchmesser konnten unter den oben angegebenen Bedingungen Nahtbreiten von unter 1,5 mm und einer Dicke von 0,1 mm erzielt werden. Unter den Bedingungen des Beispiels 2 wurden die Nähte des vorliegenden Air-Sandwichs getestet. Sie waren formstabil und sehr gut haftend.

Beispiel 4

In diesem Beispiel wurde ein Schmelzhaftklebstoff aus ataktischem Polypropylenharz ((R)Köramelt SK 562) bei einer Temperatur von ca. 180 °C, einem Druck von 4,5 bar (Stickstoffgas) und einer Viskosität von 1,8 Pa•s verarbeitet.

Analog zu Beispiel 1 wurde ein Polycarbonatträger mit zwei kreisförmigen Raupen belegt und mit einem weiteren Polycarbonatträger abgedeckt. Die aufgelegten Raupen wiesen auf den Polycarbonatträgern ein sehr gutes Adhäsionsvermögen, d. h. einen hohen Tack auf. Sie waren insbesondere unkritischer hinsichtlich ihrer Verarbeitungszeiten ("offene Zeiten") als die oben getesteten Schmelzklebstoffes.

Die Raupen sowie die Nahtausbildung innerhalb der Air-Sandwich-Systeme waren homogen. Es konnte eine gute Verklebung erzielt werden, die auch in dem in Beispiel 2 näher umrissenen Klimatest nicht schlechter wurde. Die Formstabilität der Nähte, die nach dem Klimatest geringfügig breiter wurden, entsprach jedoch nicht dem Standard.

Beispiel 5

Mit einer Schmelzklebepistole, die sich über einer drehbaren Plattenhalterung befindet, wurden zwei konzentrische Raupen aus einem feuchtigkeitshärtenden Polyurethan-Prepolymerschmelzklebstoff ((R)Tivomelt 9626) durch eine 0,4 mm Düse auf ein PC-Substrat aufgebracht. Der über der Schmelze lagernde $N_2$-Druck lag dabei bei 5 bar, die Düsenaustrittstemperatur bei ca. 125 °C (im Innenbehälter bei ca. 140 °C) und die Viskosität dieses reaktiven Schmelzklebstoffes betrug bei 130 °C 8-12 Pa·s.

Nach Verbund mit einem weiteren PC-Substrat, das mit einer magneto-optischen Aufzeichnungsschicht versehen war, betrug die Gesamtdicke des Air-Sandwiches 2,7 mm, die Klebenahtbreite lag bei unter 2 mm.

Nach Lagerung im Klimatest (290 hrs, 60 °C, 90% r.F.) wurden keine Veränderungen an den Nähten festgestellt, die Haftung des Air-Sandwiches war ausgezeichnet.

## Ansprüche

1. Optisch beschreib- und lesbares Aufzeichnungsmaterial in Air-Sandwich-Form, im wesentlichen enthaltend einen eine optische Aufzeichnungsschicht tragenden Träger und eine Platte, die der optischen Aufzeichnungsschicht gegenüberliegt, dadurch gekennzeichnet, daß der Träger mit der Platte über mindestens eine Naht aus einem Schmelzklebstoff direkt verbunden ist.

2. Aufzeichnungsmaterial nach Anspruch 1, dadurch gekennzeichnet, daß die Platte einen Träger mit einer weiteren optischen Aufzeichnungsschicht darstellt.

3. Aufzeichnungsmaterial nach Anspruch 1, dadurch gekennzeichnet, daß die Platte eine Schutzplatte darstellt.

4. Aufzeichnungsmaterial nach einem der Ansprüche 1 bis 3, dadurch gekennzeichnet, daß der Träger mit der Platte über zwei konzentrische Kreise aus Schmelzklebstoff verbunden ist.

5. Aufzeichnungsmaterial nach einem oder mehreren der Ansprüche 1 bis 4, dadurch gekennzeichnet, daß die optische Aufzeichnungsschicht einfach beschreibbar ist und einen organischen Farbstoff (Dye/Polymer- System) enthält, oder auf der Basis von Metallen beruht.

6. Aufzeichnungsmaterial nach einem oder mehreren der Ansprüche 1 bis 4, dadurch gekennzeichnet, daß die optische Aufzeichnungsschicht mehrfach beschreibbar ist, d.h. magneto-optische oder "phase-change" Eigenschaften besitzt.

7. Aufzeichnungsmaterial nach einem oder mehreren der Ansprüche 1 bis 6, dadurch gekennzeichnet, daß der Schmelzklebstoff ein (Co)polyamid, insbesondere auf Basis von dimerisierten Fettsäuren, oder ein (Co)polyester darstellt.

8. Aufzeichnungsmaterial nach einem oder mehreren der Ansprüche 1 bis 6, d.g., daß der Schmelzklebstoff vom Typ der aushärtenden Schmelzklebstoffe ist.

9. Aufzeichnungsmaterial nach Anspruch 8, dadurch gekennzeichnet, daß der Schmelzklebstoff ein feuchtigkeitshärtender Polyurethanklebstoff ist.

10. Aufzeichnungsmaterial nach einem oder mehreren der Ansprüche 1 bis 6, dadurch gekennzeichnet, daß der Schmelzklebstoff vom Typ eines Schmelzhaftklebstoffes ist.

11. Aufzeichnungsmaterial nach einem oder mehreren der Ansprüche 1 bis 10, dadurch gekennzeichnet, daß die optische Aufzeichnungsschicht zusätzlich mit einer Schutzschicht versehen ist.

FIG. 1

FIG. 2

FIG. 3

FIG. 4a

FIG. 4b

FIG. 4c

FIG. 4d

FIG. 4e

FIG. 4f

EP 0 362 669 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-4731620 (YABE ET AL)<br>* Zusammenfassung *<br>* Spalte 3, Zeile 13 - Zeile 25 *<br>* Spalte 8, Zeile 24 - Spalte 10, Zeile 29;<br>Figur 2 * | 1-4, 7,<br>8 | G11B7/24 |
| X | PATENT ABSTRACTS OF JAPAN<br>vol. 10, no. 165 (P-467)(2221) 12 Juni 1986,<br>& JP-A-61 17233 (TDK K.K.) 25 Januar 1986,<br>* siehe das ganze Dokument * | 1-4, 10 | |
| A | JOURNAL OF APPLIED PHYSICS.<br>vol. 62, no. 3, 1 August 1987, NEW YORK US<br>Seite 1123 - 1124; KURT F. WISSBRUN.:<br>"Thermal Expansion and Flow Model for Pit<br>Formation in Laser Marking of Polymeric Film<br>Optical Disks."<br>* Zusammenfassung; Figur 1 * | 5 | |
| A | EP-A-0158804 (HITACHI LTD.)<br>* Zusammenfassung * | 6 | **RECHERCHIERTE SACHGEBIETE (Int. Cl.5)** |
| A | PATENT ABSTRACTS OF JAPAN<br>vol. 12, no. 19 (P-657)() 21 Januar 1988,<br>& JP-A-61 16455 (KONISHIROKU PHOTO IND. CO.<br>LTD.) 30 Juli 1987,<br>* siehe das ganze Dokument * | 9 | G11B |

Der vorliegende Recherchenbericht wurde für alle Patentansprüche erstellt

| Recherchenort | Abschlußdatum der Recherche | Prüfer |
|---|---|---|
| DEN HAAG | 11 JANUAR 1990 | BARBER I. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes
    Dokument

EPO FORM 1503 03.82 (P0403)